(19) Europäisches Patentamt
European Patent Office
Office européen des brevets

(11) Publication number: 0 178 115 B1

# (12) EUROPEAN PATENT SPECIFICATION

(45) Date of publication of patent specification: 19.07.89

(51) Int. Cl.$^4$: C 08 F 20/14, C 08 F 2/38

(21) Application number: 85307015.9

(22) Date of filing: 01.10.85

## (54) Process for the production of heat resistant methacrylic resin.

(30) Priority: 02.10.84 JP 207276/84
12.10.84 JP 214809/84

(43) Date of publication of application:
16.04.86 Bulletin 86/16

(45) Publication of the grant of the patent:
19.07.89 Bulletin 89/29

(84) Designated Contracting States:
DE FR GB IT NL

(58) References cited:
EP-A-0 007 044
GB-A- 896 905

(73) Proprietor: SUMITOMO CHEMICAL COMPANY, LIMITED
Kitahama 4-chome 5-33
Chuo-ku Osaka 541 (JP)

(72) Inventor: Kato, Yasuyuki
5-4, Hoshigoe-cho
Niihama-shi Ehime-ken (JP)
Inventor: Yuyama, Masahiro
7-24, Hoshigoe-cho
Niihama-shi Ehime-ken (JP)
Inventor: Moritani, Masahiko
15-38, Takatsu-cho
Niihama-shi Ehime-ken (JP)
Inventor: Iijima, Susumu
19-35, Ueno Nishi 2-chome
Toyonaka-shi Osaka-fu (JP)

(74) Representative: Allard, Susan Joyce et al
BOULT, WADE & TENNANT 27 Furnival Street
London EC4A 1PQ (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 178 115 B1

Courier Press, Leamington Spa, England.

**Description**

The present invention relates to a process for the production of a heat resistant methacrylic resin. More particularly, it relates to a process for the production of a methacrylic resin having an excellent heat resistance in which a monomer or monomer mixture comprising predominantly methyl methacrylate is polymerized by a radical polymerization reaction using a specific chain transfer agent.

Methacrylic resins have an excellent transparency, gloss weatherability and mechanical properties, and hence, are widely used as materials for the preparation of a variety of formed products in various technical fields. Particularly, the methacrylic resins are widely used for the preparation of tail lamp lenses for automobiles and as lighting fixtures. For these uses the products are generally used close to a high temperature heat source, and hence, the methacrylic resins should have a high heat resistance.

However, methacrylic resins are usually inferior in their heat stability and tend to decompose during processing thereof and disadvantageously have only a narrow range of temperatures at which they can be formed. The inferior heat stability of methacrylic resins is mainly due to the thermal decomposition of the methacrylic resins during processing thereof. Accordingly, since the resins are decomposed by heat during processing, the formed products contain large amounts of monomer. This increase in monomer content in the formed products is induced by the depolymerization of the resins from the end of the molecular chain during heat processing and the molecular weight of the resin is also lowered. Because of the increase of monomer content in the formed products, the formed products disadvantageously show a very low heat resistance (low heat distortion temperature), which may be induced by the plasticizing effect of the monomer. Furthermore, the formed products have an inferior appearance and exhibit silver streaks or splash marks. In order to eliminate these drawbacks, methyl methacrylate is usually copolymerized with an acrylic ester to improve the heat resistance thereof. However, when an acrylic ester is copolymerized, the resulting copolymer shows a lower heat distortion temperature, and hence, the amount of acrylic ester to be copolymerized is limited. On the other hand, the undesirable heat decomposition of the resin cannot be prevented sufficiently by the copolymerization of such a small amount of an acrylic ester.

It has also been proposed to incorporate a small amount of an antioxidant, such as an amine or a phenol, in order to prevent the undesirable heat decomposition of methacrylic resins. However, when such antioxidants are used, the methacrylic resins become undesirably colored with heating.

Other methods have also been proposed such as the addition of mercaptans to a methacrylic resin (cf. Japanese Patent Second Publication Nos. 14491/1963, 10756/1970 and 9392/1982 and Japanese Patent First Publication No. 15444/1984); and the addition of sulfur compounds to methacrylic resin (cf. Japanese Patent Second Publication Nos. 13383/1968, 7629/1972 and 5215/1984, and Japanese Patent First Publication No. 36258/1976). Even using these methods, however, the heat decomposition is not sufficiently prevented, or the substances cannot be added in a great enough amount because of imparting an undesirable smell to the resins or showing an undesirable color on heating. It has also been proposed to add an aromatic mercaptan to the polymerization system at the end of the suspension polymerization of methyl methacrylate (cf. Japanese Patent First Publication No. 20989/1976), but this method is also inferior because it is insufficient to prevent heat decomposition or gives an undesirable smell or color. Other known methods are a process of polymerization using a combination of a specific polymerization initiator and an aliphatic mercaptan (a chain transfer agent) (cf. Japanese Patent Second Publication No. 51849/1982) and a process of polymerization using a polymerization initiator under specific conditions (cf. Japanese Patent First Publication No. 15410/1984), but these methods are insufficient to prevent the undesirable heat decomposition.

Thus, no effective method has been found for the production of methacrylic resins which have an excellent heat decomposition resistance without producing monomer during processing at a high temperature, i.e. without lowering the heat resistance (heat distortion temperature).

We have now developed an improved process for the production of a methacrylic resin having an excellent heat decomposition resistance, which does not possess an increased monomer content in the formed product during the processing thereof at a high temperature, by radical polymerization using a specific chain transfer agent.

The present invention provides a process for the production of a methacrylic polymer by radical polymerization of a monomer or monomer mixture comprising from 80 to 100% by weight of methyl methacrylate and from 0 to 20% by weight of other copolymerizable vinyl monomer, the polymerization reaction being carried out in the presence of a polymerization initiator and one or more chain transfer agents of a 2-mercaptoethyl alkanecarboxylate of the formula:

$$R-\overset{\overset{\displaystyle O}{\|}}{C}-O-CH_2-CH_2SH \qquad (1)$$

wherein R is an alkyl group having from 4 to 12 carbon atoms, the chain transfer agent being present in an amount of from 0.02 to 2 parts by weight to 100 parts by weight of the monomer or monomer mixture.

The radical polymerization reaction can be carried out by any conventional polymerization methods, such as suspension polymerization, emulsion polymerization and bulk polymerization and can be carried

out in a batch system or in a continuous system. The preferred polymerization method is a suspension polymerization wherein the monomer or monomer mixture is suspended in an aqueous medium, by which a particulate polymer can be obtained.

When a monomer or monomer mixture is polymerized by radical polymerization, a chain transfer agent is usually used together with a polymerization initiator, the chain transfer agent being bound at the terminal of molecule of the polymer. Generally, when methacylic resins are formed with heating, the depolymerization reaction proceeds at the terminal of the polymer chain, by which the monomer content of the formed product is increased, which results in a lowering of the heat resistance (heat distortion resistance) of the methacrylic resin. Whilst the mechanism is not clear, the chain transfer agent of formula (1) is effective in inhibiting an undesirable increase in monomer content in the formed products even by processing at a high temperature, and hence, the methacrylic resin prepared by the present invention can give formed products having an excellent heat resistance.

Furthermore, when the monomer or monomer mixture is suspension-polymerized in an aqueous medium, the monomer usually remains in the particulate polymer thus produced. The residual monomer lowers the heat resistance (heat decomposition resistance) of the formed product due to the plasticizing effect of the monomer, and hence, it is necessary to decrease the amount of residual monomer as much as possible. It has unexpectedly been found that when the chain transfer agent of formula (1) is used, the particulate polymer thus produced contains an extremely small amount of the residual monomer, and hence, the formed product prepared by processing the particulate polymer prepared by the process of the present invention has a particularly excellent heat resistance.

Thus, according to the present invention, methyl methacrylate monomer or monomer mixture is polymerized in the presence of the specific chain transfer agent of formula (1) to give the desired particulate methacrylic resin which has an excellent heat resistance and further is capable of giving a formed product having a low monomer content. That is, the methacrylic resin of the present invention can give a formed product having an excellent heat deformation resistance without an increase in the monomer content even on processing at a high temperature.

The 2-mercaptoethyl alkanecarboxylate of formula (1) can be prepared from 2-mercaptoethyl alcohol and an organic carboxylic acid. The alkyl group: R in formula (1) should have from 4 to 12 carbon atoms. Suitable examples of the alkanecarboxylate are 2-mercaptoethyl octanoate, 2-mercaptoethyl decanoate and 2-mercaptoethyl dodecanoate. When the group R has 3 or less carbon atoms the 2-mercaptoethyl alkanecarboxylate shows an increase in solubility in the aqueous solvent, and hence, in disadvantageous less effective as a chain transfer agent. On the other hand, when the group R has more than 12 carbon atoms the particulate polymer so-obtained has a large content of residual monomer.

The chain transfer agent is usually used in an amount of from 0.02 to 2 parts by weight, preferably from 0.05 to 1 part by weight, more preferably from 0.1 to 0.8 parts by weight, to 100 parts by weight of the monomer or monomer mixture consisting predominantly of methyl methacrylate. When the chain transfer agent is used in an amount of less than 0.02 part by weight, the polymer so-obtained has a lower heat decomposition resistance, and hence, the polymer produces a formed product having an inferior heat resistance. On the other hand, when the chain transfer agent is used in an amount of more than 2 parts by weight, the polymer produces a formed product having an undesirable color and further gives a formed product having inferior mechanical properties due to lowering of the molecular weight of the polymer thus produced. Furthermore, the polymer occasionally exhibits an undesirable smell during processing thereof with heating.

The 2-mercaptoethyl alkanecarbonate of formula (1) can be used either alone or as a mixture of two or more thereof.

In the process of the present invention, a polymerization initiator is used together with the chain transfer agent of formula (1). The polymerization temperature is not limited in the present invention, but the process is preferably carried out by suspension polymerization in an aqueous medium at a temperature of from 60 to 120°C. Accordingly, the polymerization initiator includes those which can produce radicals at this temperature range. The polymerization initiator is not limited but includes, for example, azo compounds (e.g. 2,2′-azobis(2,4-dimethylvaleronitrile), azobisisobutyronitrile, dimethyl 2,2′-azobisisobutyrate, etc.), peroxy esters (e.g. tert.-butyl peroxy pivarate, tert.-butyl peroxy 2-ethylhexanoate, cumyl peroxy 2-ethylhexanoate, etc.), diacyl peroxides (e.g. di-(3,5,5-trimethylhexanoyl) peroxide, dilauroyl peroxide, etc.). These polymerization initiators may be used alone or as a mixture of two or more thereof. The particularly preferred polymerization initiators are azo compounds, because they give the desired particulate polymers having a low residual monomer content and do not affect the heat decomposition resistance of the polymer, when used together with the chain transfer agent of formula (1) in the polymerization of the monomer or monomer mixture. The polymerization initiator is preferably used in an amount of from 0.02 to 2 parts by weight to 100 parts by weight of the monomer or monomer mixture.

The methacrylic resin of the present invention comprises a polymer or copolymer prepared from 80 to 100% by weight of methyl methacrylate and 0 to 20% by weight of another copolymerizable vinyl monomer.

The vinyl monomer copolymerizable with methyl methacrylate includes, other methacrylates (e.g. ethyl methacrylate, butyl methacrylate, cyclohexyl methacrylate, benzyl methacrylate), acrylates (e.g. methyl acrylate, ethyl acrylate, butyl acrylate, 2-ethylhexyl acrylate), methacrylic acid, acrylic acid, acrylonitrile, styrene, maleic acid, fumaric acid, or esters of these acids. These vinyl monomers may be used alone or as a mixture of two or more thereof. They are usually used in an amount of not more than 20% weight based on the total weight of the monomer mixture. When the amount of the copolymerizable vinyl monomer is above 20% by weight, the methacrylic resin thus obtained show an undesirably lower heat resistance (lower heat distortion temperature) and poorer mechanical properties.

The radical polymerization reaction is usually carried out by stirring the monomer mixture in the presence of a chain transfer agent as well as a polymerization initiator in a polymerization vessel. In the preferred embodiment, the reaction is carried out by suspension polymerization by stirring the monomer or monomer mixture in the presence of a chain transfer agent of formula (1) as well as a polymerizable initiator in an aqueous medium in a polymerization vessel. In order to prevent undesirable agglomeration or coalescence of the polymer, a nucleating agent may be used which is usually used in conventional suspension polymerization techniques. The nucleating agent includes, for example, protective colloidal substances such as gelatine, methyl cellulose, polyvinyl alcohol and polymethacrylates; and fine particle substances such as talc, kaolin and aluminium oxide.

The particulate polymer obtained by suspension polymerization is washed with water, dehydrated, and dried. The polymer is formed into various shaped products suitable for the desired uses either as it stands in particle form or after being pelletized by extrusion with an extruder. The forming is carried out by conventional methods, such as extrusion molding, injection molding, or compression moulding.

Various additives may also be incorporated therein such as coloring agents, ultraviolet absorbers, color stabilizers, plasticizers, lubricants, and various filling agents, which are optionally added at any appropriate step in the process.

The methacrylic resin prepared by the present invention has an excellent transparency, gloss, surface hardness, weatherability and mechanical properties and further possesses an excellent heat resistance, i.e. excellent heat decomposition resistance during the processing thereof with heating. Accordingly, the methacrylic resin is very useful for preparing various formed products, particularly for products which require heat resistance.

The present invention is illustrated by the following Examples. In the Examples, "part" and "%" mean "part by weight" and "% by weight" unless otherwise specified. Furthermore, the evaluation of the products in Examples 1 to 6 and Reference Examples 1 to 7 are carried out as follows:

The particulate polymer obtained by suspension polymerization is pelletized at 240°C with an extruder provided with vent (VS 40, manufactured by Tanabe Plastic, Japan), and the pellets thus obtained are formed with an injection molding machine (M140/370—SJ, manufactured by Meiki Seisakusho, Japan) at 260°C to give a transparent formed product. The heat distortion temperature of the formed product is measured after being annealed at 95°C for 20 hours in a manner as described in ASTM D—648. The melt flow index (MI) of the polymer is measured under the conditions of 230°C, a load of 3.8 kg and for 10 minutes in a manner as described in ASTM D—1238. The residual monomer in the particulate polymer, pellets and formed product is measured by gas chromatography.

## Example 1

A monomer solution (6,000 g) consisting of methyl methacrylate (98.5 parts), methyl acrylate (1.5 part), azobisisobutyronitrile (0.15 part) and 2-mercaptoethyl octanoate (0.4 part) is charged into 20 liter autoclave which contains previously an aqueous solution (12,000 g) of 1.2% sodium polymethacrylate (12 parts) and sodium phosphate (12 parts) in water (190 parts). The mixture is polymerized at 80°C for 3 hours and further at 100°C for 1 hour. The reaction product is separated, washed with water, dehydrated and dried to give a particulate polymer.

The particulate polymer thus obtained has a viscosity average molecular weight of 1,300. The particulate polymer is pelletized with an extruder, and the pellets thus prepared are formed with an injection molding machine.

The heat distortion temperature of the formed product, the melt flow index of the particulate polymer and the residual monomer content of the particulate polymer, pellets and formed product were measured. The results are shown in Table 1.

## Examples 2 to 6

In the same manner as described in Example 1, the polymerization and molding are done by using the monomer solutions, polymerization initiators, and chain transfer agents as shown in Table 1 at the temperature as shown therein.

The residual monomer content and the heat distortion temperature of the formed products were measured, likewise. The results are also shown in Table 1.

## Reference Examples 1 to 7

For comparison purpose, the polymerization and molding are done by varying the kinds and amounts of the polymerization initiator and chain transfer agent and using various monomer solutions in the same manner as described in Example 1. The residual monomer content, the melt flow index and heat distortion temperature of the formed products were measured, likewise. The results are also shown in Table 1.

Table 1

| Ex. No. | Monomer components (part) | Polymeriz. temp. (°C) | Polymerization initiator | | Chain transfer agent | | Residual monomer (%) | | | Heat distort. temp. (°C) | MI | Note |
|---|---|---|---|---|---|---|---|---|---|---|---|---|
| | | | Kind | Amount (part) | Kinds | Amount (part) | Particulate polymer | Pellets | Formed product | | | |
| Ex.1 | MMA 98.5<br>MA 1.5 | 80 | Azobisisobutyronitrile | 0.15 | 2-Mercaptoethyl octanoate | 0.4 | 0.20 | 0.16 | 0.30 | 108.5 | 2.1 | |
| Ex.2 | MMA 97.5<br>MA 2.5 | 80 | Azobisisobutyronitrile | 0.15 | 2-Mercaptoethyl octanoate | 0.4 | 0.22 | 0.18 | 0.31 | 107.2 | 2.6 | |
| Ex.3 | MMA 97.5<br>MA 2.5 | 80 | t-butyl peroxy 2-ethylhexanoate | 0.3 | 2-Mercaptoethyl octanoate | 0.4 | 0.27 | 0.19 | 0.35 | 107.0 | 2.4 | |
| Ex.4 | MMA 98.5<br>MA 1.5 | 80 | Octanoyl peroxide | 0.22 | 2-Mercaptoethyl octanoate | 0.4 | 0.40 | 0.20 | 0.40 | 107.8 | 3.0 | |
| Ex.5 | MMA 98.5<br>MA 1.5 | 80 | Azobisisobutyronitrile | 0.15 | 2-Mercaptoethyl decanoate | 0.45 | 0.26 | 0.16 | 0.31 | 108.4 | 3.4 | |
| Ex.6 | MMA 98.5<br>MA 1.5 | 80 | Azobisisobutyronitrile | 0.15 | 2-Mercaptoethyl dodecanoate | 0.5 | 0.20 | 0.18 | 0.30 | 108.5 | 3.7 | |
| Ref. Ex.1 | MMA 98.5<br>MA 1.5 | 80 | Azobisisobutyronitrile | 0.15 | 2-Mercaptoethyl butyrate | 0.4 | 0.38 | 0.19 | 0.40 | 107.8 | 0.2 | Less moldability |

- to be continued -

Table 1 (Continued)

| Ex. No. | Monomer components (part) | Polymeriz. temp. (°C) | Polymerization initiator | | Chain transfer agent | | Residual monomer (%) | | | Heat distort. temp. (°C) | MI | Note |
|---|---|---|---|---|---|---|---|---|---|---|---|---|
| | | | Kind | Amount (part) | Kinds | Amount (part) | Particulate polymer | Pellets | Formed product | | | |
| Ref. Ex.2 | MMA 98.5<br>MA 1.5 | 80 | Azobisisobutyronitrile | 0.15 | 2-Mercaptoethyl tetradecanoate | 0.6 | 0.63 | 0.23 | 0.69 | 105.6 | 5.1 | |
| Ref. Ex.3 | MMA 98.5<br>MA 1.5 | 80 | Azobisisobutyronitrile | 0.15 | 2-Mercaptoethyl octanoate | 4 | 0.21 | 0.18 | 0.41 | 107.7 | >50 *) | Inferior mechanical strength Unuseful |
| Ref. Ex.4 | MMA 97.5<br>MA 2.5 | 65 | Azobisisobutyronitrile | 1.2 | 2-Mercaptoethyl octanoate | 0.01 | 0.43 | 0.30 | 1.04 | 103.3 | 0.1 | |
| Ref. Ex.5 | MMA 97.5<br>MA 2.5 | 80 | Azobisisobutyronitrile | 0.15 | Laurylmercaptane | 0.35 | 0.31 | 0.18 | 0.65 | 104.4 | 2.0 | |
| Ref. Ex.6 | MMA 97.5<br>MA 2.5 | 80 | t-butyl peroxy 2-ethylhexanoate | 0.3 | Octylmercaptane | 0.3 | 0.46 | 0.15 | 0.61 | 105.1 | 3.3 | |
| Ref. Ex.7 | MMA 97.5<br>MA 2.5 | 80 | Octanoyl peroxide | 0.22 | Octylmercaptane | 0.3 | 0.53 | 0.16 | 0.63 | 105.0 | 3.5 | |

MMA: Methyl methacrylate, MA: Methyl acrylate
*): Unable to be measured

Reference Example 8

To the particulate polymer (100 parts) obtained in Reference Example 5 is added 2-mercaptoethyl octanoate (0.4 part), and the mixture is mixed well with V type blender and then pelletized at 240°C with an extruder provided with a bent (VS 40, manufactured by Tanabe Plastic, Japan). The pellets thus prepared are molded by injection molding in the same manner as described in Examples 1 to 7.

Various properties of the formed product were measured in the same manner as described in Examples 1 to 7. As a result, the heat deformation temperature of the formed product was 105.7°C, and the residual monomer contents of the pellets and the formed product were 0.20% and 0.51%, respectively. Besides, the formed product was transparent without color, but had bad smell.

## Claims

1. A process for the production of a methacrylic polymer by the radical polymerization of a monomer of monomer mixture comprising from 80 to 100% by weight of methyl methacrylate and from 0 to 20% by weight of a copolymerizable vinyl monomer, the polymerization reaction being carried out in the presence of a polymerization initiator and one or more chain transfer agents of a 2-mercaptoethyl alkanecarboxylate of the formula:

$$R-\overset{\overset{\displaystyle O}{\|}}{C}-O-CH_2-CH_2SH \qquad (1)$$

wherein R is an alkyl group having from 4 to 12 carbon atoms, the chain transfer agent being present in an amount of from 0.02 to 2 parts by weight to 100 parts by weight of the monomer or monomer mixture.

2. A process as claimed in claim 1, wherein the polymerization initiator is an azo compound.

3. A process as claimed in claim 1 or claim 2 wherein the radical polymerization is carried out by a suspension polymerization method.

4. A method as claimed in any one of the preceding claims wherein the polymerization initiator is present in an amount of from 0.02 to 2 parts by weight to 100 parts by weight of the monomer or monomer mixture.

5. A process as claimed in any one of the preceding claims wherein the chain transfer agent is 2-mercaptoethyl octanoate, 2-mercaptoethyl decanoate or 2-mercaptoethyl dodecanate.

6. A process as claimed in any one of the preceding claims wherein the chain transfer agent is present in an amount of from 0.1 to 0.8 parts by weight to 100 parts by weight of the monomer or monomer mixture.

7. A process as claimed in any one of the preceding claims wherein the vinyl monomer is another methacrylate, an acrylate, methacrylic acid, acrylic acid, acrylonitrile, styrene, maleic acid, fumaric acid or an ester of these acids.

## Patentansprüche

1. Verfahren zur Herstellung eines Methacryl-Polymeren durch radikalische Polymerisation eines Monomers oder Monomergemisches, das 80 bis 100 Gew.-% Methylmethacrylat und 0 bis 20 Gew.-% eines copolymerisierbaren Vinylmonomeren umfaßt, wobei die Polymerisationsreaktion in Gegenwart eines Polymerisationsinitiators und eines oder mehrerer Kettenübertragen aus einem 2-Mercaptoäthylalkancarboxylat der Formel

$$R-\overset{\overset{\displaystyle O}{\|}}{C}-O-CH_2-CH_2SH \qquad (1)$$

wobei R einen Alkylrest mit 4 bis 12 Kohlenstoffatomen bedeutet und der Kettenübertrager in einer Menge von 0,02 bis 2 Gew.-Teilen pro 100 Gew.-Teilen Monomer oder Monomergemisch vorhanden ist.

2. Verfahren nach Anspruch 1, in dem der Polymerisationsinitiator eine Azoverbindung ist.

3. Verfahren nach Anspruch 1 oder Anspruch 2, in dem die radikalische Polymerisation nach einem Suspensionspolymerisationsverfahren durchgeführt wird.

4. Verfahren nach einem der vorangehenden Ansprüche, in dem der Polymerisationsinitiator in einer Menge von 0,02 bis 2 Gew.-Teile pro 100 Gew.-Teile des Monomeren oder des Monomerengemisches vorhanden ist.

5. Verfahren nach einem der vorangehenden Ansprüche, in dem der Kettenübertrager 2-Mercaptoäthyloctanoat, 2-Mercaptoäthyldecanoat oder 2-Mercaptoäthyldodecanoat ist.

6. Verfahren nach einem der vorangehenden Ansprüche, in dem der Kettenübertrager in einer Menge von 0,1 bis 0,8 Gew.-Teilen pro 100 Gewichtsteile des Monomeren oder Monomerengemisches vorhanden ist.

7. Verfahren nach einem der vorangehenden Ansprüche, in dem das Vinylmonomer ein anderes Methacrylat, ein Acrylat, Methacrylsäure, Acrylsäure, Acrylnitril, Styrol, Maleinsäure, Fumarsäure oder ein Ester dieser Säuren ist.

**Revendications**

1. Procédé pour la production d'un polymère méthacrylique, par la polymérisation radicalaire d'un monomère, ou d'un mélange de monomères comprenant de 80 à 100% en poids de méthacrylate de méthyle et de 0 à 20% en poids d'un monomère vinylique copolymérisable, la réaction de polymérisation étant effectuée en présence d'un amorceur de polymérisation et d'un ou plusieurs agents de transfert des chaînes constitués par un alcanecarboxylate de 2-mercaptoéthyle de formule:

$$R-\overset{\overset{\displaystyle O}{\|}}{C}-O-CH_2-CH_2SH \qquad (1)$$

(dans laquelle R représente un groupe alkyle ayant de 4 à 12 atomes de carbone), l'agent de transfert des chaînes étant pris en une quantité de 0,02 à 2 parties en poids pour 100 parties en poids du monomère, ou du mélange des monomères.

2. Procédé tel que revendiqué à la revendication 1, dans lequel l'amorceur de polymérisation est un composé azoïque.

3. Procédé tel que revendiqué à la revendication 1 ou à la revendication 2, dans lequel on effectue la polymérisation radicalaire par une méthode de polymérisation en suspension.

4. Procédé selon l'une quelconque des revendications précédentes, dans lequel l'amorceur de la polymérisation est présent en une quantité de 0,02 à 2 parties en poids pour 100 parties en poids du monomère ou du mélange des monomères.

5. Procédé tel que revendiqué dans l'une quelconque des revendications précédentes, dans lequel l'agent de transfert des chaînes est l'octanoate de 2-mercaptoéthyle, le décanoate de 2-mercaptoéthyle ou le dodécanoate de 2-mercaptoéthyle.

6. Procédé tel que revendiqué dans l'une quelconque des revendications précédentes dans lequel l'agent de transfert des chaînes est présent à une quantité de 0,1 à 0,8 partie en poids pour 100 parties en poids du monomère ou du mélange des monomères.

7. Procédé tel que revendiqué dans l'une quelconque des revendications précédentes, dans lequel le monomère vinylique est un autre méthacrylate, un acrylate, l'acide méthacrylique, l'acide acrylique, l'acrylonitrile, le styrène, l'acide maléïque, l'acide fumarique ou un ester de ces acides.